# FASCICULE DE BREVET EUROPEEN

(11) **EP 3 286 811 B1**
(45) Date de publication et mention de la délivrance du brevet: **04.10.2023**
(21) Numéro de dépôt: 16722918.6
(22) Date de dépôt: 22.04.2016
(51) Int. Cl.: H01S 3/067

(54) **FIBRE OPTIQUE MONOMODE CONÇUE POUR COMPENSER UNE VARIATION D'INDICE DE REFRACTION LIÉE AUX EFFETS THERMIQUES ET LASER UTILISANT UNE TELLE FIBRE OPTIQUE COMME MILIEU AMPLIFICATEUR**
OPTISCHE MONOMODUSFASER ZUR KOMPENSATION EINER BRECHUNGSINDEXVARIATION IM ZUSAMMENHANG MIT THERMISCHEN EFFEKTEN UND LASER MIT SOLCH EINER OPTISCHEN FASER ALS VERSTÄRKUNGSMEDIUM
MONOMODE OPTICAL FIBRE DESIGNED TO COMPENSATE FOR A REFRACTIVE INDEX VARIATION RELATED TO THERMAL EFFECTS AND LASER USING SUCH AN OPTICAL FIBRE AS A GAIN MEDIUM

(30) Priorité: 24.04.2015 FR 1553710
(43) Date de publication de la demande: 28.02.2018
(73) Titulaire: Université de Limoges, 87032 Limoges Cedex (FR); Centre National de la Recherche Scientifique (C.N.R.S.), 75794 Paris (FR)
(72) Inventeur: ROY, Philippe Vincent, 87100 Limoges (FR); DAULIAT, Romain, 87100 Limoges (FR); JAMIER, Raphaël Emmanuel, 87100 Limoges (FR)
(74) Mandataire: Fantin, Laurent
(86) Numéro de dépôt international: PCT/FR2016/050960
(87) Numéro de publication internationale: WO 2016/170287

(56) Documents cités:
- US-A1- 2007 206 912
- US-A1- 2011 228 382
- FLORIAN JANSEN ET AL: "High-power very large mode-area thulium-doped fiber laser", OPTICS LETTERS, OPTICAL SOCIETY OF AMERICA, US, vol. 37, no. 21, 1 novembre 2012 (2012-11-01), pages 4546-4548, XP001579287, ISSN: 0146-9592, DOI: 10.1364/OL.37.004546 [extrait le 2012-10-30]
- FLORIAN JANSEN ET AL: "The influence of index-depressions in core- pumped Yb-doped large pitch fibers", OPTICS EXPRESS, vol. 18, no. 26, 7 décembre 2010 (2010-12-07), pages 26834-26842, XP055287453, DOI: 10.1364/OE.18.026834
- FLORIAN JANSEN ET AL: "Thermally induced waveguide changes in active fibers", OPTICS EXPRESS, vol. 20, no. 4, 13 février 2012 (2012-02-13), page 3997, XP055250221, DOI: 10.1364/OE.20.003997
- ENRICO COSCELLI ET AL: "Thermal effect-resilient design of large mode area double-cladding Yb-doped photonic crystal fibers", PROCEEDING OF SPIE, FIBER LASERS X: TECHNOLOGY, SYSTEMS, AND APPLICATIONS, vol. 8601, 26 février 2013 (2013-02-26), pages 86012O-1-8601O-7, XP055250241, ISSN: 0277-786X, DOI: 10.1117/12.2004048 ISBN: 978-1-5106-0167-3
- DAULIAT R ET AL: "Large mode area aperiodic fiber designs for robust singlemode EMI ion under high thermal load", PROCEEDINGS OF SPIE, CONFERENCE ON MICRO-STRUCTURED AND SPECIALTY OPTICAL FIBRES IV, 15 APRIL 2015 TO 16 APRIL 2015, PRAGUE, CZ, vol. 9507, 15 avril 2015 (2015-04-15), XP060053243, DOI: 10.1117/12.2178935
- FLORIAN JANSEN ET AL: "High-power thermally guiding index-antiguiding-core fibers", OPTICS LETTERS, OPTICAL SOCIETY OF AMERICA, US, vol. 38, no. 4, 15 février 2013 (2013-02-15), pages 510-512, XP001580519, ISSN: 0146-9592, DOI: HTTP://DX.DOI.ORG/10.1364/OL.38.000510

## Description

La présente invention a pour objet une fibre optique monomode conçue pour compenser une variation d'indice de réfraction liée à des effets thermiques. Une telle fibre optique est particulièrement adaptée, mais non exclusivement, pour être utilisée comme un milieu de transport et d'amplification dans un laser à fibre optique de forte puissance.

Le terme laser à fibre optique recouvre toute application dans laquelle la capacité de la fibre à émettre de la lumière par désexcitation électronique d'éléments ayant préalablement été placés dans un état électronique excité, est mis en oeuvre. Cela concerne donc aussi bien les lasers que, plus généralement, les amplificateurs optiques. La fibre optique de l'invention peut être utilisée dans des lasers à émission continue ou impulsionnelle.

Le succès des lasers à fibres optiques s'explique par leurs nombreuses propriétés : ils combinent une grande efficacité optique, une bonne capacité à dissiper la chaleur, un potentiel d'intégration élevé et une excellente qualité de faisceau.

De manière connue, dans un laser à fibre optique, la fibre optique est utilisée comme milieu actif lorsqu'elle est dopée d'ions de terres rares (erbium, ytterbium, thulium, holmium, néodyme...). Dans ce cas, la cavité résonante est constituée de la fibre dopée placée entre deux miroirs ou rebouclée sur elle-même.

Pour les lasers de puissance, selon une première forme de réalisation connue, la structure de la fibre est composée d'un coeur monomode (par exemple en silice dopée par des ions de terre rare) et d'une gaine de pompage multimode (par exemple en silice dopée ou non), de plus grande dimension que le coeur, ce qui permet la propagation des différents modes d'une pompe multimode. Selon cette configuration, l'onde de pompe est guidée dans la gaine multimode de la fibre tandis que l'onde laser est générée puis guidée uniquement dans le coeur monomode. Le faisceau laser ainsi généré est un faisceau monomode qui possède toutes les propriétés de cohérence spatiale et temporelle souhaitées avec une puissance significative due au pompage multimode.

On connaît également des fibres optiques monomodes à triple gaine, qui permettent d'améliorer l'efficacité d'amplification tout en maintenant le caractère monomode du coeur. Le brevet FR2 974 637 décrit ainsi une fibre optique comprenant du centre vers sa périphérie :
- un coeur monomode dopé au moins partiellement par une terre rare ;
- une gaine intermédiaire, optiquement inactive dont l'indice de réfraction effectif diffère de l'indice de réfraction du coeur par au plus 10⁻³;
- une gaine de pompage multimode, et
- une gaine externe.

En contrôlant le profil de l'indice de réfraction dans la gaine intermédiaire, il est possible d'assurer une faible différence d'indice de réfraction entre le coeur et la gaine intermédiaire tout en disposant d'un coeur dont le diamètre et le taux de dopage sont élevés. La fibre ainsi formée offre donc à la fois une amplification améliorée tout en conservant le caractère monomode.

On entend par faisceau monomode, un faisceau dont la divergence est proche du minimum imposé par la diffraction du profil d'intensité dudit faisceau.

Toutefois dans toutes ces structures de fibre optique, l'accès à de fortes puissances est limité du fait de son très faible volume actif et du confinement élevé de l'énergie lumineuse dans le coeur qui possède un diamètre compris entre quelques µm et quelques dizaines de µm. Les fortes densités de puissance favorisent l'apparition d'effets non linéaires qui altèrent la qualité du faisceau laser émis.

Pour contourner les problèmes liés aux effets non linéaires, la solution la plus pertinente proposée ces dernières années a consisté à développer des fibres microstructurées qui permettent d'augmenter l'aire effective du coeur de la fibre tout en préservant le caractère monomode du faisceau de sortie.

Selon une forme de réalisation, les fibres microstructurées se présentent sous la forme d'un agencement périodique ou apériodique avec des inclusions de bas indice ou haut indice entourant un défaut qui sert de coeur. Ainsi on peut moduler l'indice effectif de la gaine en ajustant le pas du réseau et le diamètre des inclusions. L'onde est guidée uniquement dans le coeur par un mécanisme de réflexion totale modifiée ou par un mécanisme de guidage par bande interdite photonique.

Afin de réduire les effets non linéaires, on doit donc augmenter la surface de mode tout en demeurant monomode. Pour ce faire, il faut diminuer une différence d'indice Δn = n_{cœur} - n_{gaine} entre le coeur et la gaine pour assurer le caractère monomodal. La maîtrise de cette différence d'indice de l'ordre 1×10⁻⁴ a ainsi été rendue possible en modulant l'indice effectif de la gaine micro-structurée.

Toutefois, l'augmentation drastique des dimensions du coeur ne peut se faire qu'en assurant également un contrôle le plus précis possible de la différence d'indice Δn = n_{coeur} -n_{gaine} entre l'indice du coeur de la fibre et l'indice de la gaine intermédiaire. Ainsi dans les fibres à large coeur ou LMA (Large Mode Area), le paramètre Δn devient un paramètre primordial pour assurer d'une part le phénomène de guidage de l'onde, et d'autre part le caractère monomodal du faisceau laser émis à la sortie de la fibre optique.

Or le défaut quantique, découlant de l'effet laser, entraîne un échauffement du matériau qui peut, à très forte puissance, provoquer une modification de l'indice de réfraction des matériaux et altérer les propriétés de guidage de la fibre optique. En effet l'indice de réfraction augmente avec la température. Ainsi, à forte puissance, le phénomène d'amplification peut induire une élévation indicielle dans la section transverse de la fibre optique de l'ordre de 10⁻⁵ à quelques 10⁻⁴. Cette valeur peut paraître faible si l'on considère la propagation de l'onde dans une fibre standard présentant un saut d'indice (coeur- gaine) de l'ordre de quelques 1.10⁻³. Cependant, dans les fibres microstructurées à larges aires modales monomodes, la différence d'indice entre le coeur et la gaine peut être inférieure à 1.10⁻⁴. Dans ces structures, les variations d'indice induites par l'échauffement de la matière peuvent alors affecter la qualité spatiale du faisceau émis, telle qu'une diminution du diamètre de champ de mode et des instabilités modales.

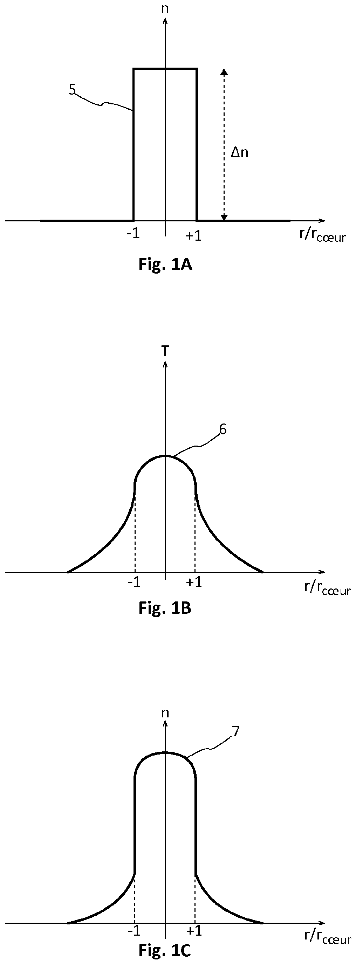

Sur la figure 1A, on a représenté de manière schématique un profil d'indice 5 d'une fibre optique standard à saut d'indice ne subissant aucune perturbation extérieure. Une telle fibre optique est dite « fibre optique froide » correspondant à un état non actif de la fibre optique. Pour des fibres optiques, le profil d'indice correspond à la distribution de l'indice de réfraction de la fibre en fonction du rayon de la fibre optique. On représente de façon classique sur les abscisses la variable r (issu d'un repère r, θ) normalisée par rapport au rayon du coeur, et sur les ordonnées la différence entre l'indice de réfraction du coeur et l'indice de réfraction de la gaine de la fibre. L'abscisse r = 0 représente le centre de la fibre optique. Du centre jusqu'à r/r_{cœur} = ± 1 s'étend le coeur de la fibre d'indice n_{cœur}. Δn représente la différence d'indice entre l'indice de réfraction du coeur de la fibre et celui de la gaine optique. Selon la figure 1A, l'indice du coeur de la fibre optique présente une valeur sensiblement constante/uniforme sous la forme d'un échelon.

Selon une forme de réalisation, il est possible de ne pas doper activement toute la surface du coeur de la fibre. Le coeur est alors constitué d'une zone centrale dopée activement entourée d'une zone annulaire périphérique ayant le même indice de réfraction que la zone centrale mais dopée passivement ou non dopée. Il est possible d'envisager d'autres formes de distribution de dopants dans le coeur.

Sur la figure 1B, on a représenté schématiquement en 6 le profil d'un gradient de température apparaissant dans le coeur d'une fibre optique lorsqu'elle est dans un état actif.

On entend par état actif un état dans laquelle la fibre optique est en train d'être utilisée pour amplifier une onde lumineuse. A l'état actif de la fibre optique, la fonction de pompage est active et la fibre optique est soumise à une élévation de température due à un chargement thermique, contrairement à l'état non actif de la fibre optique dans lequel, la fonction de pompage n'est pas active et la fibre optique n'est pas soumise à une élévation de température due à un chargement thermique. On peut voir que le maximum de la température est situé au centre du coeur de la fibre optique. La température décroît quadratiquement dans le coeur dopé activement lorsque l'on s'éloigne de son centre.

Sur la figure 1C, on a représenté schématiquement en 7 un profil d'indice d'une fibre optique dans un état actif. Il ne se présente plus sous la forme d'un palier. En effet, bien que la différence d'indice à l'interface coeur actif/gaine reste inchangé, le profil global subit une évolution de type gradient. Cette modification du profil d'indice dans le coeur et la gaine est induite par des effets thermiques proportionnels à la densité de puissance optique dans le coeur. Typiquement, un gradient d'indice de 5.10⁻⁵ peut être observé sur un coeur de 50 µm de diamètre pour l'absorption de 75 W/m de puissance de pompe.

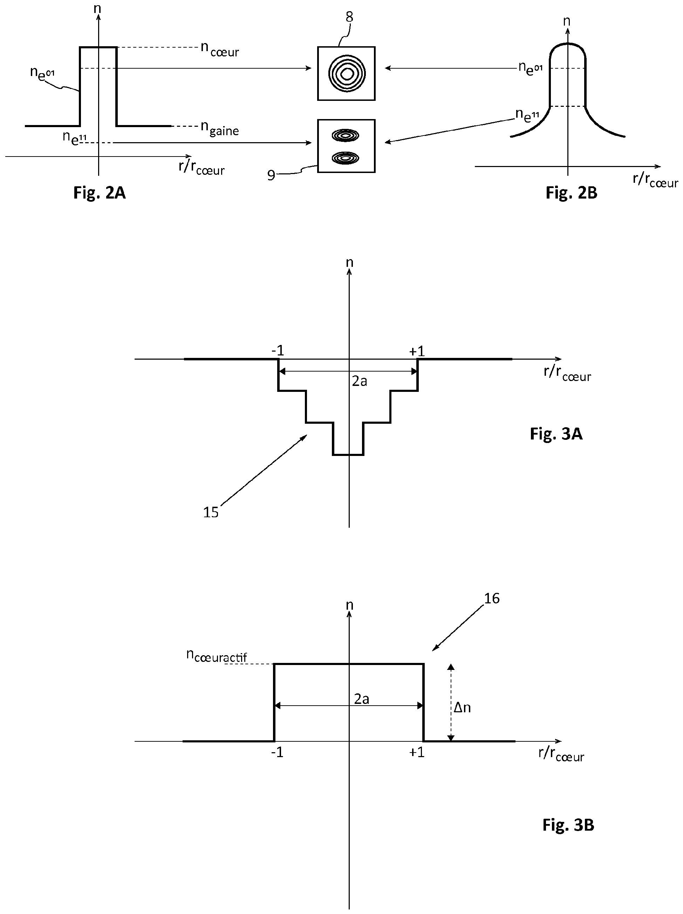

Sur la figure 2A, on a représenté schématiquement le profil d'indice d'une fibre optique dans un état non actif et les indices effectifs nₑ⁰¹, nₑ¹¹ des deux premiers modes guidés dans le coeur. Seul l'indice effectif nₑ⁰¹ du premier mode est compris entre l'indice du coeur n_{coeur} et l'indice de la gaine n_{gaine}. De ce fait, seul le premier mode est autorisé à se propager dans le coeur de la fibre. L'indice effectif nₑ¹¹ du deuxième mode n'étant pas compris entre l'indice du coeur et celui de la gaine, le deuxième mode n'est donc pas autorisé à se propager dans le coeur. L'indice effectif peut être assimilé à l'indice de réfraction vu par la lumière se propageant selon un mode dans la structure du coeur.

Sur la figure 2A, on a représenté en 8 la distribution d'intensité en champ proche du mode fondamental en sortie de la fibre optique. On observe que le faisceau émis en sortie d'une telle fibre optique est monomode.

Sur la figure 2B, on a représenté le profil d'indice d'une fibre optique dans un état actif. L'indice effectif du deuxième mode nₑ¹¹ est dorénavant compris entre l'indice du coeur et l'indice de la gaine et est ainsi confiné dans le coeur. Ainsi, le deuxième mode peut se propager dans le coeur. On a représenté en 9 sur la figure 2B sa distribution d'intensité en champ proche en sortie de la fibre optique. On observe que le faisceau émis en sortie est multimode, ce qui confirme l'altération de la qualité spectrale du faisceau due aux effets thermiques.

Ainsi, même si les nouvelles architectures des fibres optiques microstructurées permettent de repousser les seuils d'apparition des effets non linéaires, il n'existe pas pour l'instant de solution technique au problème du contrôle du profil d'indice de la fibre optique, du fait des effets thermiques qui apparaissent dans les fibres opérant dans des plages de puissance importante.

FLORIAN JANSEN et al "High-power very large mode-area thulium-doped fiber laser", OPTICS LETTERS, vol. 37, pages 4546-4548 (2012) divulgue un laser à fibre optique monomode selon le préambule des revendications 1 et 4.

L'invention propose une fibre optique monomode avec un profil d'indice conçu pour pré-compenser les variations d'indice de réfraction lorsque la fibre optique fonctionne dans des plages de puissance optique élevée. La solution de l'invention permet d'assurer ainsi un meilleur contrôle des caractéristiques modales des fibres optiques.

A cet effet , l'invention telle que définie dans la revendication 1 concerne une fibre optique monomode comprenant, depuis son centre vers sa périphérie :
- un coeur monomode;
- au moins une gaine entourant ledit coeur qui présente au moins un indice de réfraction de gaine,
la fibre optique étant configurée pour occuper un état non actif dans lequel la fibre optique n'est pas soumise à un chargement thermique et un état actif dans lequel la fibre optique est soumise à un chargement thermique. La fibre optique est associée à une plage de puissance optique délimitée par un seuil supérieur et un seuil inférieur, sur laquelle la fibre optique fonctionne en régime monomode, la fibre optique ne fonctionnant en régime monomode qu'à partir du seuil inférieur qui est supérieur à 0.

Selon l'invention, le coeur monomode comprend au moins deux zones, une première zone avec au moins un premier indice de réfraction et une deuxième zone avec au moins un deuxième indice de réfraction différent du premier indice de réfraction, la différence entre le premier indice de réfraction et le deuxième indice de réfraction étant du même ordre de grandeur qu'une variation du deuxième indice de réfraction de la deuxième zone, ladite variation étant induite par un effet thermique entre l'état non actif et l'état actif de la fibre. Selon l'invention, le premier indice de réfraction est inférieur ou égal à l'indice de réfraction de la gaine à l'état non actif de la fibre optique. Selon l'invention, le deuxième indice de réfraction est inférieur au premier indice de réfraction et la deuxième zone est adjacente à la gaine.

Plus précisément, par rapport aux fibres de l'état de la technique, l'invention propose de remplacer la valeur constante de l'indice de réfraction dans le coeur monomode de la fibre par une pluralité de valeurs discrètes de l'indice négatif en prévision d'une variation d'indice de réfraction due aux effets thermiques dans cette région. Ainsi grâce à la présente invention, cette variation d'indice de réfraction induite dans une région de la fibre lorsque la fibre est dans un état actif est pré-compensées par le profil d'indice négatif lorsque la fibre optique est dans un état non actif. De fait, lorsque la fibre optique est dans un état actif, fonctionnant en configuration amplificateur ou laser, les modifications induites par les effets thermiques sur le profil d'indice de la fibre optique sont pré-compensées et le profil d'indice global du coeur permet de préserver un faisceau monomode jusqu'à des niveaux de puissances plus élevés que pour l'art antérieur.

Dans différents modes de réalisation possibles, la présente invention concerne également des caractéristiques qui ressortiront au cours de la description qui va suivre et qui devront être considérées isolément ou selon toutes leurs combinaisons techniquement possibles :
- la différence entre le premier indice de réfraction et le deuxième indice de réfraction est inférieure à 1.10⁻³ à l'état non actif de la fibre optique,
- la deuxième zone s'étend de manière continue sur tout le pourtour du coeur monomode,
- le coeur monomode comprend un ratio entre la superficie de la section transversale de la première zone et la superficie de la section transversale de la deuxième zone supérieur à 1, et de préférence supérieur à 2.

Dans un autre mode de réalisation, l'invention telle que définie dans la revendication 4 concerne une fibre optique monomode comprenant, depuis son centre vers sa périphérie:
- un coeur monomode; et
- au moins une gaine entourant ledit coeur présentant au moins un indice de réfraction de gaine,

la fibre optique étant configurée pour occuper un état non actif dans lequel la fibre optique n'est pas soumise à un chargement thermique et un état actif dans lequel la fibre optique est soumise à un chargement thermique,
le coeur monomode comprenant au moins deux zones, une première zone avec au moins un premier indice de réfraction et une deuxième zone avec au moins un deuxième indice de réfraction différent du premier indice de réfraction, la différence entre le premier indice de réfraction et le deuxième indice de réfraction étant du même ordre de grandeur qu'une variation du deuxième indice de réfraction de la deuxième zone induite par un effet thermique entre l'état non actif et l'état actif de la fibre,
le premier indice de réfraction étant inférieur ou égal à l'indice de réfraction de la gaine à l'état non actif de la fibre optique,
où le coeur monomode comprend plusieurs deuxièmes zones disjointes, où le deuxième indice de réfraction est inférieur au premier indice de réfraction et où les deuxièmes zones sont adjacentes à la gaine.

Dans un mode de réalisation possible, les deuxièmes zones sont réparties de manière asymétrique.

De préférence, le diamètre du coeur est compris entre 35 µm et 200 µm.

La présente invention concerne également un laser à fibre optique de forte puissance comprenant une fibre optique monomode telle que définie ci-dessus en tant que milieu d'amplification optique de manière à générer un faisceau laser de forte puissance et monomode.

L'invention a également pour objet un procédé de fabrication d'une fibre optique monomode conforme à l'invention.

D'autres caractéristiques et avantages de l'invention ressortiront de la description suivante de modes particuliers de réalisation de l'invention, donnés à titre d'exemples non limitatifs, en référence aux dessins annexés, sur lesquels :
Figure 1A est une représentation schématique d'un profil d'indice du coeur d'une fibre optique dans un état non actif selon l'état de la technique, Δn représentant la différence indicielle entre l'indice de réfraction du coeur de la fibre et celui de la première gaine optique entourant le coeur ;
Figure 1B est une représentation schématique d'un gradient de température apparaissant dans le coeur d'une fibre optique dans un état actif;
Figure 1C est une représentation schématique d'un profil d'indice modifié lié aux effets thermiques lorsque la fibre optique est dans un état actif;
Figure 2A est une représentation schématique du profil d'indice d'une fibre optique froide avec les indices effectifs associés aux deux premiers modes guidés dans le coeur nₑ⁰¹, nₑ¹¹ et la distribution d'intensité en champ proche en sortie d'une telle fibre optique ;
Figure 2B est une représentation schématique du profil d'indice d'une fibre optique chaude avec les indices effectifs associés aux deux premiers modes guidés dans le coeur et la distribution d'intensité en champ proche en sortie d'une telle fibre comprenant une combinaison spatiale des deux modes guidés ;
Figure 3A est une représentation schématique d'un profil à gradient d'indice négatif radial d'une fibre optique froide ;
Figure 3B est une représentation schématique d'un profil d'indice de la fibre optique de la figure 3a lorsque la fibre optique est chaude, c'est-à-dire fonctionnant dans une gamme de puissance déterminée pour une émission monomode ;
Figure 4A et Figure 4B illustrent respectivement une vue en coupe d'une fibre optique comportant un coeur composé d'un ensemble d'éléments longitudinaux formant trois couches concentriques selon un premier mode de réalisation de l'invention et un profil d'indice correspondant comportant trois paliers d'indice négatif selon selon une alternative non revendiquée;
Figure 5A et Figure 5B illustrent respectivement une vue en coupe d'une fibre optique semblable à celle de la figure 4A et un profil d'indice correspondant comportant un palier d'indice négatif enterré selon une forme de réalisation de l'invention;
Figure 6A et Figure 6B illustrent respectivement une vue en coupe d'une fibre optique semblable à celle de la figure 4A et un profil d'indice correspondant comportant un palier d'indice négatif enterrée ; selon une alternative non revendiquée;
Figure 7 est une représentation schématique d'une fibre optique selon un deuxième mode de réalisation de l'invention ;
Figure 8 illustre les différentes phases de l'évolution du profil d'indice d'une fibre optique à gradient d'indice négatif en fonction de la puissance optique ;
Figure 9 illustre une coupe d'une fibre selon l'art antérieur et des coupes de fibres optiques selon l'invention et reporte les gammes de fonctionnement monomode de chacune d'entre elles.

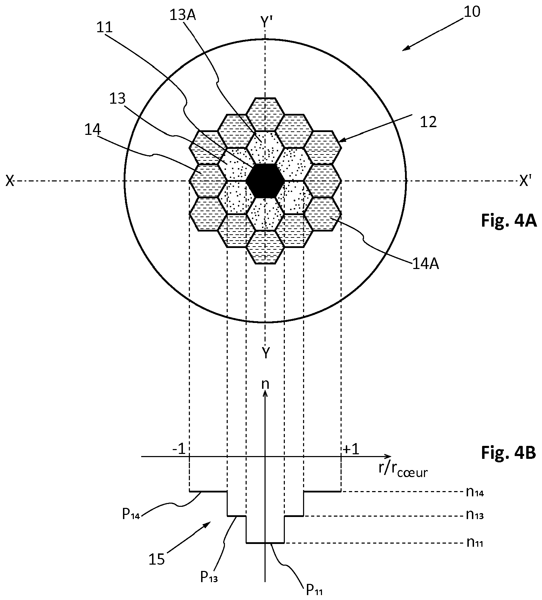

Une fibre optique monomode 10 prévue pour émettre un rayonnement lumineux à une longueur d'onde donnée comprend depuis son centre vers sa périphérie un coeur monomode au moins partiellement dopé ou non par des ions de terres rares et au moins une gaine entourant ledit coeur. Une section transversale dans un plan (X-X' ; Y-Y') d'une telle fibre est représentée sur la figure 4A.

Selon une forme connue telle que décrite dans le document FR2 974 637, la fibre comprend une première gaine entourant le coeur, optiquement inactive mais qui contribue à conférer au coeur son caractère monomode et une deuxième gaine de pompage et une gaine extérieure.

Le coeur de la fibre optique monomode correspond à la région de la fibre optique où est générée et se propage l'onde laser.

Lorsque cette fibre optique est mise dans un état actif, le profil d'indice de certaines régions de la fibre optique est modifié par un effet thermique. A titre d'exemple, lorsque la fibre optique est dans un état actif, on voit apparaître essentiellement un gradient de température qui s'étend depuis le centre de la fibre optique jusqu'à l'interface extérieure de la fibre pour permettre un échange thermique avec le milieu environnant (figure 1B). Ce gradient de température entraîne une modification du profil d'indice de la fibre optique qui peut affecter le caractère monomode du faisceau émis.

On entend par fibre optique dans un état non actif une fibre optique qui n'est pas dans un état de fonctionnement et dont le profil d'indice ne subit pas de perturbations extérieures, telles que l'échauffement dans le coeur de la fibre. Dans l'état non actif, la fibre optique (plus particulièrement son coeur) n'est pas soumise à une élévation de température due à un chargement thermique. Pour la suite de la description, on désigne une telle fibre optique par le terme « fibre optique froide ».

On entend par fibre optique dans un état actif une fibre optique qui est en train d'être utilisée pour amplifier une onde lumineuse. Dans l'état actif, la fibre optique (plus particulièrement son coeur) est soumise à une élévation de température due à un chargement thermique. Pour la suite de la description, on désigne une telle fibre optique par le terme « fibre optique chaude ».

Selon un mode de réalisation de l'invention, on propose de configurer le coeur monomode de la fibre optique de sorte qu'il présente un profil d'indice comprenant au moins un palier d'indice négatif lorsqu'il est dans un état non actif déterminé pour pré-compenser les variations d'indice de réfraction induites par un gradient de température apparaissant dans cette région de la fibre optique.

On entend par « palier d'indice » une partie du profil d'indice qui présente une valeur constante.

Ainsi, le profil d'indice du coeur de la fibre comprend une pluralité de paliers d'indice négatif de manière à pouvoir compenser plus précisément les variations d'indice de réfraction induites par un chargement thermique dans la fibre optique. La valeur constante de l'indice dans le coeur de la fibre optique qui est affecté par les effets thermiques, est remplacée par au moins deux valeurs d'indices de réfraction négatifs. L'accroissement du nombre de valeurs discrètes de l'indice dans le coeur permet de mieux contrôler le profil d'indice de la fibre en fonction des variations d'indice de réfraction induites par un chargement thermique.

Selon une forme de réalisation, seul le coeur de la fibre optique est concerné.

Selon une alternative non revendiquée, le profil d'indice du coeur comprend une pluralité de paliers d'indice négatif qui croît depuis le centre du coeur jusqu'à la périphérie du coeur. Cette pluralité de paliers d'indice négatif définit un profil à gradient d'indice négatif. Ce profil à gradient d'indice négatif est déterminé pour compenser les variations d'indice de réfraction induites par un gradient de température apparaissant dans cette région de la fibre optique lorsque la fibre optique est dans un état actif. De fait, ce profil à gradient d'indice négatif est déterminé pour une puissance optique visée correspondant à un gradient de température donné.

Sur la figure 3A, on a représenté un exemple d'un profil à gradient d'indice négatif 15 lorsque ladite fibre optique est dans un état non actif. Ce profil comporte trois paliers d'indice négatif. La région concerne uniquement le coeur et l'indice de réfraction croît depuis le centre du coeur jusqu'à la périphérie du coeur. Comme l'illustre la figure 4B, chacun des trois paliers correspond à une zone du coeur ayant un indice de réfraction négatif constant. Chacune des parties présente un indice négatif constant qui croît depuis le coeur de la fibre jusqu'à la périphérie du coeur. Ainsi, le coeur comporte une partie centrale avec un indice négatif n₁₁, une première partie annulaire avec un indice négatif n₁₃ qui est supérieur à n₁₁ et une troisième partie annulaire avec un indice négatif n₁₄ qui est supérieur à n₁₃. Bien entendu, il est possible d'augmenter le nombre de paliers d'indice négatif ou d'induire des paliers supplémentaires au sein d'une partie annulaire afin de mieux ajuster le profil d'indice de la fibre en fonction des variations indicielles.

Lorsque la fibre optique est placée dans l'état actif, le profil de l'indice négatif du coeur tend vers un indice positif n_{coeuractif} sensiblement constant/uniforme sous l'effet thermique telle qu'illustrée sur la figure 3B. Les écarts indiciels entre le profil à gradient d'indice négatif 15 et le profil d'indice positif constant du coeur 16 correspondent aux variations d'indice de réfraction induites le long de toute direction radiale de la fibre optique par les effets thermiques générés par une plage de valeurs de puissance optique déterminée et souhaitée par l'utilisateur.

Sur la figure 1C, on peut noter qu'une partie de la première gaine se trouvant à l'interface entre le coeur et la première gaine présente également une variation d'indice liée aux effets thermiques. Pour compenser également cette variation indicielle dans la région d'interface entre le coeur et la gaine, le coeur et une partie de la première gaine entourant le coeur sont configurés pour présenter un profil d'indice comprenant une pluralité de paliers d'indice négatif qui croît depuis le centre de la fibre optique jusqu'à la périphérie de la première gaine.

La région concernée présente une structure particulière afin de pouvoir ajuster son profil d'indice en terme du nombre de paliers d'indice négatif ou du positionnement du ou des palier(s) dans le profil d'indice.

Cette région comprend un ensemble d'éléments longitudinaux, chacun des éléments longitudinaux présentant un indice de réfraction homogène, ces éléments étant agencés de manière à former une succession de couches concentriques pour définir un profil d'indice souhaité pour pré-compenser les variations indicielles.

Ces éléments sont agencés de façon adjacente de manière à couvrir toute la surface de cette région dans un plan transversal de la fibre optique. Ils présentent chacun une section de forme hexagonale dont les côtés sont en contact avec ceux des éléments longitudinaux limitrophes. Toutefois, toute autre forme de section peut être adaptée, en particulier une forme circulaire, rectangulaire ou triangulaire.

Sur la figure 4A, on a représenté une fibre optique monomode 10 conforme à une alternative non revendiquée.

Elle comporte depuis son centre vers sa périphérie un coeur monomode 12 ayant un profil à gradient d'indice négatif et au moins une gaine entourant le coeur. Le coeur 12 est formé d'une pluralité d'éléments longitudinaux 11, 13A, 14A agencés de manière à former une partie centrale 11 et deux couches concentriques 13, 14 entourant la partie centrale, chacun des éléments longitudinaux présentant un indice de réfraction homogène n₁₁, n_{13A}, n_{14A}. Chacune des couches 11, 13, 14 est formée d'éléments longitudinaux identiques pour présenter un indice de réfraction constant n₁₁, n₁₃, n₁₄.

Le profil d'indice conféré par les trois couches est un profil à gradient d'indice négatif qui croît depuis la partie centrale du coeur vers la périphérie du coeur. Le profil comporte ici un premier palier d'indice négatif noté P₁₁ correspondant à l'indice de la partie centrale 11, un deuxième palier d'indice négatif noté P₁₃ correspondant à l'indice de la couche intermédiaire 13 et un troisième palier d'indice négatif noté P₁₄ correspondant à l'indice de la couche 14. L'indice de la partie centrale n₁₁ est inférieur à l'indice n₁₃ de la couche intermédiaire qui est lui-même inférieur à l'indice n₁₄ de la couche 14. Ce gradient d'indice négatif permet de pré-compenser les variations d'indice de réfraction induites par un gradient de température tel qu'illustré sur la figure 1B.

Une des caractéristiques intéressantes de la solution de la présente invention est de pouvoir moduler le profil d'indice pour pré-compenser les variations d'indice de réfraction induites par un chargement thermique en fonction des applications.

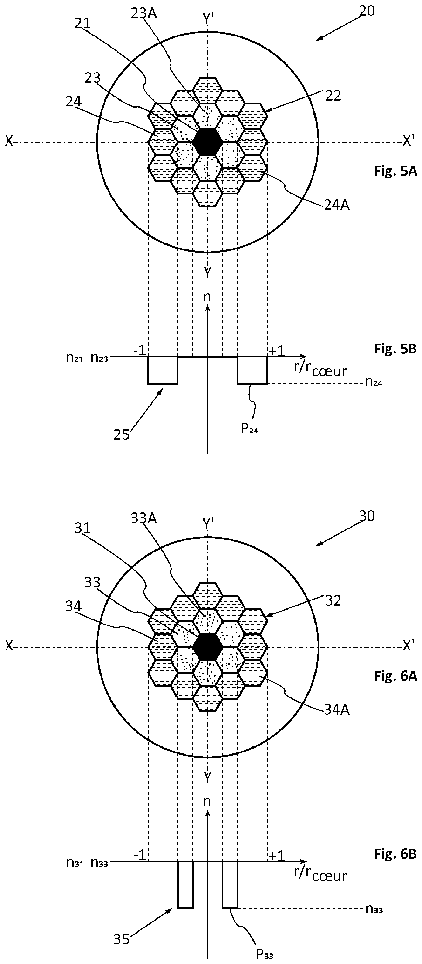

Sur la figure 5A, on a représenté une fibre optique monomode ,selon une forme de réalisation de l'invention, semblable à celle de la figure 4A. Elle comporte un coeur monomode 22 et une première gaine entourant le coeur. Le coeur 22 est formé d'une pluralité d'éléments longitudinaux 21, 23A, 24A agencés de manière à former une partie centrale 21 et deux couches concentriques 23, 24 entourant la partie centrale, chacun des éléments longitudinaux présentant un indice de réfraction homogène n₂₁, n_{23A}, n_{24A}. Chacune des couches 21, 23, 24 est formée d'éléments longitudinaux identiques pour présenter un indice de réfraction homogène n₂₁, n₂₃, n₂₄.

Sur la figure 5B, on a représenté une variante du profil d'indice de la figure 4B, selon une alternative non revendiquée. Le profil d'indice 25 conféré par les trois couches de la figure 5A comporte ici un seul palier d'indice négatif enterré P₂₄ correspondant à la couche 24.

Sur la figure 6A, on a représenté une fibre optique monomode 30 semblable à celle de la figure 4A. Elle comporte un coeur monomode 32 et une première gaine entourant le coeur. Le coeur 32 est formé d'une pluralité d'éléments longitudinaux 31, 33A, 34A agencés de manière à former une partie centrale 31 et deux couches concentriques 33, 34 entourant la partie centrale, chacun des éléments longitudinaux présentant un indice de réfraction homogène n₃₁, n_{33A}, n_{34A}. Chacune des couches 31, 33, 34 est formée d'éléments longitudinaux identiques pour présenter un indice de réfraction homogène n₃₁, n₃₃, n₃₄.

Selon la figure 6B, le profil d'indice conféré 35 par les trois couches de la figure 6A comporte un seul palier d'indice négatif enterré P₃₃ correspondant à la couche 33.

L'invention (et des alternatives non revendiquées) a été décrite ci-dessus, en référence aux figures 4A, 5A et 6A pour une région intégralement constituée d'éléments longitudinaux, mais il va de soi que cette région peut n'être que partiellement formée de tels éléments, et le reste de la région pouvant être formé d'un seul élément longitudinal présentant un unique indice de réfraction.

Selon un deuxième mode de réalisation de l'invention, cette région comprend une succession de couches concentriques, chacune des couches concentriques présentant un indice de réfraction constant, l'ensemble définit un profil d'indice négatif souhaité pour pré-compenser les variations indicielles.

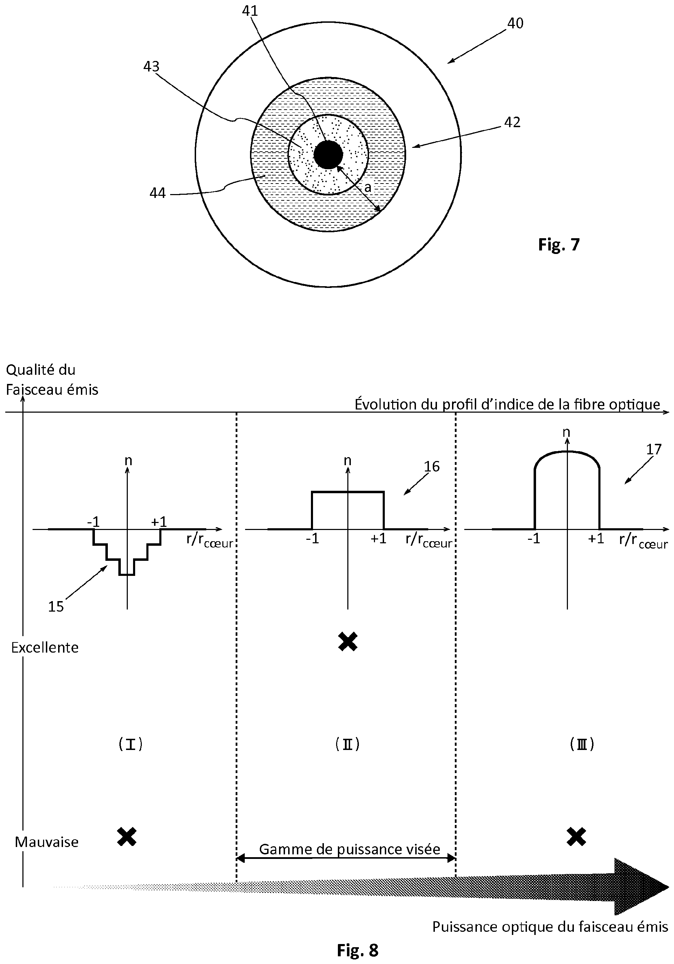

Un exemple d'une telle fibre optique 40 est illustré sur la figure 7. Elle comporte depuis son centre vers sa périphérie un coeur monomode 42 et une première gaine entourant le coeur. Le coeur 42 est formé d'une succession de trois couches concentriques circulaires 41, 43, 44, chacune des couches étant constituée d'un unique élément longitudinal de section annulaire. Chacune des couches présente un indice de réfraction constant, l'ensemble défini un profil d'indice négatif souhaité pour pré-compenser les variations d'indice de réfraction induites par un chargement thermique. Selon une alternative non revendiquée, ce profil d'indice négatif est par exemple un profil à gradient d'indice négatif qui croît depuis le centre du coeur jusqu'à la périphérie du coeur tel qu'illustré sur la figure 4B. Selon une forme de réalisation de l'invention le profil comporte un seul palier d'indice négatif tel qu'illustré sur les figures 5B et 5C ou une pluralité de paliers d'indice négatif.

Sur la figure 8, on a représenté l'évolution du profil d'indice du coeur de la fibre optique en fonction de la puissance optique du faisceau émise depuis le coeur. Dans cet exemple, la variation d'indice de réfraction de la gaine qui est considérée comme très faible par rapport à la variation du coeur n'est pas représentée sur la figure 8. On distingue trois zones. Dans une première zone (I), le coeur présente un profil à gradient d'indice négatif lorsque la fibre optique est dans un état non actif, correspondant à une gamme de puissance optique nulle ou très faible. On entend par une puissance optique très faible une puissance optique ne générant pas d'effets thermiques suffisant pour altérer l'indice de réfraction. Dans une deuxième zone (II), lorsque la fibre optique est dans un état actif, correspondant à une gamme de puissance optique souhaitée pour laquelle on a déterminé les variations d'indice de réfraction entre la fibre optique dans un état non actif et la fibre optique dans un état actif, l'indice du coeur est homogène sur toute la surface du coeur et le profil d'indice comprend un palier d'indice positif. La qualité du faisceau émis est excellente. Dans une troisième zone (III), lorsque la fibre optique fonctionne avec une gamme de puissances optiques supérieures à la gamme de puissances optiques souhaitées, le profil à gradient d'indice négatif n'est plus suffisant pour compenser les variations indicielles du fait des effets thermiques. La fibre optique devient alors multimode.

La présente invention permet donc d'assurer le bon fonctionnement de la fibre optique active dans une gamme de puissance souhaitée par l'utilisateur.

De manière connue, l'indice de réfraction global du coeur 12, 22, 32, 42 doit être déterminé de sorte que la différence Δn entre l'indice de réfraction du coeur lorsque la fibre optique est dans un état actif et celui de la première gaine entourant le coeur soit aussi faible que possible, par exemple de l'ordre de 10⁻⁴ permettant d'assurer l'émission d'un faisceau lumineux monomode à une longueur d'onde donnée.

Par ailleurs, selon la condition sur le rayon de coeur a et sur la différence d'indice Δn, le diamètre 2a du coeur est déterminé pour permettre un confinement de la lumière dans le coeur. Le diamètre 2a du coeur est typiquement compris entre 35 et 200 µm.

Quel que soit le mode de réalisation de l'invention, le coeur de la fibre comprend au moins deux zones, une première zone avec au moins un premier indice de réfraction et une deuxième zone avec au moins un deuxième indice de réfraction différent du premier indice de réfraction, la différence entre le premier indice de réfraction et le deuxième indice de réfraction étant du même ordre de grandeur que la variation du deuxième indice de réfraction entre l'état non actif et l'état actif de la fibre.

Par de même ordre de grandeur, on entend que la différence entre le premier indice de réfraction et le deuxième indice de réfraction est comprise entre 0,1 et 10 fois la variation du deuxième indice de réfraction entre l'état actif et l'état non actif de la fibre.

Par zone du coeur, on entend une partie de la section transversale du coeur. Chaque zone peut avoir un indice de réfraction constant sur toute la zone ou comprendre au moins deux secteurs, chaque secteur ayant un indice de réfraction constant, les secteurs ayant des indices de réfraction différents.

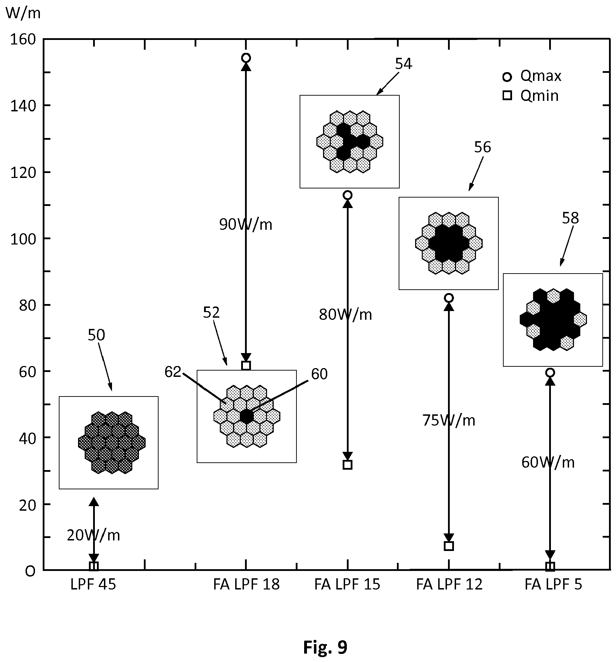

Sur les figures 9, on a représenté en 50 le coeur d'une fibre selon l'art antérieur qui comprend un indice de réfraction constant/uniforme sur toute la section du coeur lorsque la fibre est non active, et des coeurs de fibres 52, 54, 56, 58 conformes à l'invention. Chaque fibre est associée à une plage de puissance optique délimitée par un seuil supérieur Qmax et un seuil inférieur Qmin, sur laquelle la fibre optique monomode fonctionne en régime monomode.

Pour un diamètre de coeur donné, la fibre optique monomode 50 de l'art antérieur fonctionne sur une plage allant de l'ordre de 0 à 20 W/m.

On constate qu'à diamètre de coeur égal, les fibres optiques monomodes 52, 54, 56, 58 conformes à l'invention fonctionnent sur des plages avec un seuil supérieur Qmax supérieur ou égal à 60 W/m. Pour la fibre optique monomode 52, le seuil supérieur Qmax atteint 160 W/m.

Par ailleurs, l'invention permet d'augmenter la plage de fonctionnement qui est supérieure ou égale à 60 W/m alors que la plage de fonctionnement de la fibre optique monomode 50 de l'art antérieur est limitée à 20 W/m.

Le coeur des fibres optiques monomodes 52, 54, 56 et 58 comprend au moins deux zones 60, une première zone 60 avec un premier indice et au moins une deuxième zone 62 avec un deuxième indice de réfraction inférieur au premier indice de réfraction.

Pour donner un ordre de grandeur, la gaine a un indice de réfraction de 1,457. Pour le coeur, le premier indice de réfraction est égal à n_{c} (de l'ordre de 1,457) et le deuxième indice de réfraction est égal à n_{c} - 1.10⁻⁴.

Pour les fibres optiques monomodes 52, 54, 56, la deuxième zone 62 s'étend sur toute la périphérie du coeur et sépare la première zone 60 de la gaine. Ces configurations permettent d'obtenir des plages de fonctionnement avec des seuils supérieurs Qmax élevés. Toutefois, le seuil inférieur Qmin de ces plages de fonctionnement est supérieur à 0 si bien que ces fibres optiques monomodes ne fonctionnent en régime monomode qu'à partir d'une certaine puissance.

Pour les fibres optiques monomodes 52, 54, le coeur monomode comprend un ratio entre la superficie de la section transversale de la première zone et la superficie de la section transversale de la deuxième zone inférieur à 1. Dans le cas de la fibre optique 56, le coeur monomode comprend un ratio entre la superficie de la section transversale de la première zone et la superficie de la section transversale de la deuxième zone supérieur à 1. Ainsi, plus ce ratio est important et plus le seuil inférieur Qmin est proche de 0. Ainsi, dans le cas de la fibre optique monomode 56, le seuil inférieur Qmin est de l'ordre de 5 W/m. Toutefois, plus ce ratio est important et moins le seuil supérieur Qmax est important.

Selon un autre mode de réalisation illustré par la fibre optique monomode 58, le coeur monomode comprend plusieurs deuxièmes zones 62 disjointes. Selon l'invention, ces deuxièmes zones disjointes sont disposées adjacentes à la gaine. Dans ce cas, le coeur monomode comprend un ratio entre la superficie de la section transversale de la première zone et la superficie de la section transversale de la deuxième zone supérieur à 2.

Avantageusement, les deuxièmes zones 62 disjointes sont agencées de manière asymétrique.

On constate que pour la fibre optique monomode 58, le seuil inférieur Qmin est égal à 0.

Selon un mode de réalisation de l'invention, le procédé pour fabriquer une fibre optique 10, 20, 30 conforme au premier mode de réalisation et une fibre optique monomode 40 conforme au deuxième mode de réalisation comprend les étapes suivantes :
- on dispose une poudre dans des préformes correspondant respectivement à des éléments longitudinaux ou barreaux du coeur monomode,
- on vitrifie lesdites préformes,
- on adapte les dimensions desdites préformes par fibrage afin de former les barreaux,
- on agence lesdits barreaux en quinconce de manière à former le coeur monomode,
- on établit le vide entre lesdits éléments longitudinaux.

On peut se référer au brevet FR2 974 637 pour connaître plus en détail ce procédé.

D'autres procédé de fabrication pourraient être mis en oeuvre pour réaliser et assembler entre eux les éléments longitudinaux tels que le procédé de dépôt chimique modifié par voie gazeuse, plus connu sous l'abréviation « MCVD » (de l'expression anglo-saxon : « modified chemical vapor phase deposition »).

Selon l'invention, le coeur monomode est composé d'un ensemble de barreaux comprenant au moins un premier type de barreau avec un premier indice de réfraction et au moins un deuxième type de barreau avec un deuxième indice de réfraction différent du premier indice de réfraction, la différence entre le premier indice de réfraction et le deuxième indice de réfraction étant du même ordre de grandeur que la variation d'indice de réfraction de la deuxième zone entre l'état non actif et l'état actif de la fibre optique.

Selon l'invention, le deuxième indice de réfraction est inférieur au premier indice de réfraction.

Selon certains modes de réalisation, les barreaux du deuxième type sont disposés sur tout le pourtour du coeur monomode de manière à obtenir une deuxième zone continue sur tout le pourtour du coeur monomode.

Selon certains modes de réalisation, les barreaux du deuxième type sont disjoints et de préférence disposés de manière asymétrique.

Selon l'invention, les barreaux du deuxième type sont disposés adjacents à la gaine.

Selon certains modes de réalisation, le ratio entre le nombre de barreaux du premier type et le nombre de barreaux du deuxième type est supérieur à 1, et de préférence supérieur à 2.

## Revendications

1. Fibre optique monomode (20, 52, 54, 56) comprenant, depuis son centre vers sa périphérie :
- un coeur monomode (22); et
- au moins une gaine entourant ledit coeur présentant au moins un indice de réfraction de gaine,
la fibre optique étant configurée pour occuper un état non actif dans lequel la fibre optique n'est pas soumise à un chargement thermique et un état actif dans lequel la fibre optique est soumise à un chargement thermique, la fibre optique étant associée à une plage de puissance optique délimitée par un seuil supérieur (Qₘₐₓ) et un seuil inférieur (Qₘᵢₙ), sur laquelle la fibre optique fonctionne en régime monomode, la fibre optique ne fonctionnant en régime monomode qu'à partir du seuil inférieur qui est supérieur à 0,
le coeur monomode (22) comprenant au moins deux zones (60, 62), une première zone (60) avec au moins un premier indice de réfraction et une deuxième zone (62) avec au moins un
deuxième indice de réfraction différent du premier indice de réfraction, la différence entre le premier indice de réfraction et le deuxième indice de réfraction étant du même ordre de grandeur qu'une variation du deuxième indice de réfraction de la deuxième zone induite par un effet thermique entre l'état non actif et l'état actif de la fibre,
le premier indice de réfraction étant inférieur ou égal à l'indice de réfraction de la gaine à l'état non actif de la fibre optique,
**caractérisée en ce que** le deuxième indice de réfraction est inférieur au premier indice de réfraction et **en ce que** la deuxième zone est adjacente à la gaine.

2. Fibre optique monomode selon la revendication 1, **caractérisée en ce que** la différence entre le premier indice de réfraction et le deuxième indice de réfraction est inférieure à 1.10⁻³ à l'état non actif de la fibre optique.

3. Fibre optique monomode selon l'une des revendications précédentes, **caractérisée en ce que** la deuxième zone (62) s'étend de manière continue surtout le pourtour du coeur monomode (22).

4. Fibre optique monomode (20, 58) comprenant, depuis son centre vers sa périphérie:
- un coeur monomode (22); et
- au moins une gaine entourant ledit coeur présentant au moins un indice de réfraction de gaine,
la fibre optique étant configurée pour occuper un état non actif dans lequel la fibre optique n'est pas soumise à un chargement thermique et un état actif dans lequel la fibre optique est soumise à un chargement thermique,
le coeur monomode (22) comprenant au moins deux zones (60, 62), une première zone (60) avec au moins un premier indice de réfraction et une deuxième zone avec au moins un deuxième indice (62) de réfraction différent du premier indice de réfraction, la différence entre le premier indice de réfraction et le deuxième indice de réfraction étant du même ordre de grandeur qu'une variation du deuxième indice de réfraction de la deuxième zone induite par un effet thermique entre l'état non actif et l'état actif de la fibre,
le premier indice de réfraction étant inférieur ou égal à l'indice de réfraction de la gaine à l'état non actif de la fibre optique, **caractérisée en ce que** le coeur monomode comprend plusieurs deuxièmes zones (62) disjointes, **en ce que** le deuxième indice de réfraction est inférieur au premier indice de réfraction et **en ce que** les deuxièmes zones (62) sont adjacentes à la gaine.

5. Fibre optique monomode selon la revendication précédente, **caractérisée en ce que** les deuxièmes zones (62) disjointes sont réparties de manière asymétrique.

6. Fibre optique monomode selon l'une des revendications précédentes, **caractérisée en ce que** le coeur monomode (22) comprend un ratio entre la superficie de la section transversale de la première zone (60) et la superficie de la section transversale de la deuxième zone (62) supérieur à 1, et de préférence supérieur à 2.

7. Fibre optique monomode selon l'une des revendications précédentes, **caractérisée en ce que** le diamètre du coeur (22) est compris entre 35 µm et 200 µm.

8. Laser à fibre optique de forte puissance comprenant une fibre optique monomode (20, 52, 54, 56, 58) selon l'une des revendications 1 à (7) en tant que milieu d'amplification optique afin de générer un faisceau laser de forte puissance et monomode.

9. Procédé de fabrication d'une fibre optique monomode selon l'une des revendications 1 à 7, **caractérisé en ce qu'**au moins le coeur monomode (22) de la fibre est obtenu à partir d'un ensemble de barreaux longitudinaux (21, 23A, 24A) agencés en quinconce, l'ensemble de barreaux comprenant au moins un premier type de barreau avec un premier indice de réfraction pour obtenir une première zone (60) et au moins un deuxième type de barreau avec un deuxième indice de réfraction, pour obtenir une deuxième zone (62), différent du premier indice de réfraction, la différence entre le premier indice de réfraction et le deuxième indice de réfraction étant du même ordre de grandeur que la variation d'indice de réfraction de la deuxième zone entre l'état non actif et l'état actif de la fibre optique, le deuxième indice de réfraction étant inférieur au premier indice de réfraction, les barreaux du deuxième type étant adjacents à la gaine.

10. Procédé de fabrication selon la revendication précédente, **caractérisé en ce que** les barreaux du deuxième type sont disjoints.

11. Procédé de fabrication selon la revendication précédente, **caractérisé en ce que** les barreaux du deuxième type sont répartis de manière asymétrique.

12. Procédé de fabrication selon la revendication 9, **caractérisé en ce que** les barreaux du deuxième type sont disposés de manière continue sur tout le pourtour du coeur monomode (22).

## Patentansprüche

1. Optische Einmodenfaser (20, 52, 54, 56), die von ihrer Mitte zu ihrem Außenbereich hin umfasst:
- einen Einmodenkern (22); und
- wenigstens einen Mantel, der den Kern umgibt und wenigstens einen Mantelbrechungsindex aufweist,
wobei die optische Faser so eingerichtet ist, dass sie einen nicht aktiven Zustand, in dem die optische Faser keiner thermischen Belastung ausgesetzt ist, und einen aktiven Zustand einnimmt, in dem die optische Faser einer thermischen Belastung ausgesetzt ist,
wobei die optische Faser einem Bereich optischer Leistung zugeordnet ist, der durch einen oberen Schwellenwert (Qₘₐₓ) und einen unteren Schwellenwert (Qₘᵢₙ) begrenzt ist, in dem die optische Faser im Einmodenbetrieb arbeitet, wobei die optische Faser nur ab dem unteren Schwellenwert, der größer als 0 ist, im Einmodenbetrieb arbeitet,
wobei der Einmodenkern (22) wenigstens zwei Bereiche (60, 62) umfasst, einen ersten Bereich (60) mit wenigstens einem ersten Brechungsindex und einen zweiten Bereich (62) mit wenigstens einem zweiten Brechungsindex, der sich vom ersten Brechungsindex unterscheidet, wobei der Unterschied zwischen dem ersten Brechungsindex und dem zweiten Brechungsindex in der gleichen Größenordnung liegt wie eine Änderung des zweiten Brechungsindex des zweiten Bereichs, die durch einen thermischen Effekt zwischen dem nicht aktiven Zustand und dem aktiven Zustand der Faser hervorgerufen wird,
wobei der erste Brechungsindex kleiner oder gleich dem Brechungsindex des Mantels im nicht aktiven Zustand der optischen Faser ist,
**dadurch gekennzeichnet, dass** der zweite Brechungsindex kleiner als der erste Brechungsindex ist und dass der zweite Bereich an den Mantel angrenzt.

2. Optische Einmodenfaser nach Anspruch 1, **dadurch gekennzeichnet, dass** die Differenz zwischen dem ersten Brechungsindex und dem zweiten Brechungsindex im nicht aktiven Zustand der optischen Faser weniger als 1 x 10⁻³ beträgt.

3. Optische Einmodenfaser nach einem der vorhergehenden Ansprüche, **dadurch gekennzeichnet, dass** sich der zweite Bereich (62) kontinuierlich um den gesamten Umfang des Einmodenkerns (22) herum erstreckt.

4. Optische Einmodenfaser (20, 58), die von ihrem Zentrum zu ihrem Außenbereich hin umfasst:
- einen Einmodenkern (22); und
- wenigstens einen den Kern umgebenden Mantel, der wenigstens einen Mantelbrechungsindex aufweist,
wobei die optische Faser so eingerichtet ist, dass sie einen nicht aktiven Zustand, in dem die optische Faser keiner thermischen Belastung ausgesetzt ist, und einen aktiven Zustand einnimmt, in dem die optische Faser einer thermischen Belastung ausgesetzt ist,
wobei der Einmodenkern (22) wenigstens zwei Bereiche (60, 62) umfasst, einen ersten Bereich (60) mit wenigstens einem ersten Brechungsindex und einen zweiten Bereich mit wenigstens einem zweiten Brechungsindex (62), der sich von dem ersten Brechungsindex unterscheidet, wobei der Unterschied zwischen dem ersten Brechungsindex und dem zweiten Brechungsindex in der gleichen Größenordnung liegt wie eine Änderung des zweiten Brechungsindex des zweiten Bereichs, die durch einen thermischen Effekt zwischen dem nicht aktiven Zustand und dem aktiven Zustand der Faser hervorgerufen wird,
wobei der erste Brechungsindex kleiner oder gleich dem Brechungsindex des Mantels im nicht aktiven Zustand der optischen Faser ist,
**dadurch gekennzeichnet, dass** der Einmodenkern mehrere disjunkte zweite Bereiche (62) umfasst, dass der zweite Brechungsindex kleiner als der erste Brechungsindex ist und dass die zweiten Bereiche (62) an den Mantel angrenzen.

5. Optische Einmodenfaser nach dem vorhergehenden Anspruch, **dadurch gekennzeichnet, dass** die disjunkten zweiten Bereiche (62) asymmetrisch verteilt sind.

6. Optische Einmodenfaser nach einem der vorhergehenden Ansprüche, **dadurch gekennzeichnet, dass** der Einmodenkern (22) ein Verhältnis der Querschnittsfläche des ersten Bereichs (60) zur Querschnittsfläche des zweiten Bereichs (62) von größer als 1 und vorzugsweise größer als 2 umfasst.

7. Optische Einmodenfaser nach einem der vorhergehenden Ansprüche, **dadurch gekennzeichnet, dass** der Durchmesser des Kerns (22) zwischen 35 µm und 200 µm liegt.

8. Hochleistungs-Faserlaser mit einer Einmodenfaseroptik (20, 52, 54, 56, 58) nach einem der Ansprüche 1 bis 7 als optisches Verstärkungsmedium zur Erzeugung eines Hochleistungs- und Einmodenlaserstrahls.

9. Verfahren zur Herstellung einer optischen Einmodenfaser nach einem der Ansprüche 1 bis 7, **dadurch gekennzeichnet, dass** zumindest der Einmodenkern (22) der Faser aus einer Anordnung von Längsstäben (21, 23A, 24A) erhalten wird, die versetzt angeordnet sind, wobei die Anordnung von Stäben zumindest einen ersten Stabtyp mit einem ersten Brechungsindex umfasst, um eine erste Zone (60) zu erhalten, und zumindest einen zweiten Stabtyp mit einem zweiten Brechungsindex umfasst, der sich vom ersten Brechungsindex unterscheidet, um einen zweiten Bereich (62) zu erhalten, wobei der Unterschied zwischen dem ersten Brechungsindex und dem zweiten Brechungsindex die gleiche Größenordnung hat wie die Brechungsindexänderung des zweiten Bereichs zwischen dem nicht aktiven Zustand und dem aktiven Zustand der optischen Faser, wobei der zweite Brechungsindex kleiner ist als der erste Brechungsindex und wobei die Stäbe des zweiten Typs an den Mantel angrenzen.

10. Herstellungsverfahren nach dem vorhergehenden Anspruch, **dadurch gekennzeichnet, dass** die Stäbe des zweiten Typs disjunkt sind.

11. Herstellungsverfahren nach dem vorhergehenden Anspruch, **dadurch gekennzeichnet, dass** die Stäbe des zweiten Typs asymmetrisch verteilt sind.

12. Herstellungsverfahren nach Anspruch 9, **dadurch gekennzeichnet, dass** die Stäbe des zweiten Typs kontinuierlich um den gesamten Umfang des Einmodenkerns (22) herum angeordnet sind.

## Claims

1. Single-mode optical fiber (20, 52, 54, 56) comprising, from its center to its periphery:
- a single-mode core (22); and
- at least one layer of cladding surrounding said core having at least one cladding refractive index,
the optical fiber being configured to occupy an inactive state in which the optical fiber is not subject to a thermal load and an active state in which the optical fiber is subject to a thermal load, the optical fiber being associated with an optical power range delimited by an upper threshold (Qₘₐₓ) and a lower threshold (Qₘᵢₙ), in which the optical fiber operates in single-mode regime, the optical fiber operating in the single-mode regime only from the lower threshold which is greater than 0,
the single-mode core (22) comprising at least two zones (60, 62), a first zone (60) with at least a first refractive index and a second zone (62) with at least a second refractive index that is different from the first refractive index, the difference between the first refractive index and the second refractive index being of the same order of magnitude as a variation in the second refractive index of the second zone caused by a thermal effect between the inactive state and the active state of the fiber, the first refractive index being lower than or equal to the cladding refractive index in the inactive state of the optical fiber,
**characterized in that** the second refractive index is lower than the first refractive index and **in that** the second zone (62) is adjacent to the cladding.

2. Single-mode optical fiber as claimed in claim 1, **characterized in that** the difference between the first refractive index and the second refractive index is smaller than 1.10⁻³ in the inactive state of the optical fiber.

3. Single-mode optical fiber as claimed in one of the preceding claims, **characterized in that** the second zone extends continuously around the entire perimeter of the single-mode core (12).

4. Single-mode optical fiber (20, 58), comprising, from its center to its periphery:
- a single-mode core (22); and
- at least one layer of cladding surrounding said core having at least one cladding refractive index,
the optical fiber being configured to occupy an inactive state in which the optical fiber is not subject to a thermal load and an active state in which the optical fiber is subject to a thermal load,
the single-mode core (22) comprising at least two zones (60, 62), a first zone (60) with at least a first refractive index and a second zone (62) with at least a second refractive index that is different from the first refractive index, the difference between the first refractive index and the second refractive index being of the same order of magnitude as a variation in the second refractive index of the second zone caused by a thermal effect between the inactive state and the active state of the fiber,
the first refractive index being lower than or equal to the cladding refractive index in the inactive state of the optical fiber, **characterized in that** the single-mode core comprises multiple disjunct second zones, **in that** the second refractive index is lower than the first refractive index and **in that** the second zones (62) are adjacent to the cladding .

5. Single-mode optical fiber as claimed in the preceding claim, **characterized in that** the disjunct second zones (62) are distributed asymmetrically.

6. Single-mode optical fiber as claimed in one of the preceding claims, **characterized in that** the single-mode core (22) comprises a ratio between the area of the cross section of the first zone (60) and the area of the cross section of the second zone (62) that is greater than 1, and preferably greater than 2.

7. Single-mode optical fiber as claimed in one of the preceding claims, **characterized in that** the diameter of the core (22) is between 35 µm and 200 µm.

8. High-power optical fiber laser comprising a single-mode optical fiber (20, 52, 54, 56, 58) as claimed in one of claims 1 to 7 in the capacity of an optical amplification medium for the purpose of generating a single-mode high-power laser beam.

9. Method for manufacturing a single-mode optical fiber as claimed in one of claims 1 to 7, **characterized in that** at least the single-mode core (22) of the fiber is obtained on the basis of an assembly of longitudinal bars (21, 23A, 24A) arranged in a staggered configuration, the assembly of bars comprising at least a first type of bar with a first refractive index to obtain a first zone (60) and at least a second type of bar with a second refractive index, to obtain a second zone (62), different from the first refractive index, the difference between the first refractive index and the second refractive index being of the same order of magnitude as the variation in refractive index of the second zone between the inactive state and the active state of the optical fiber, the second refractive index being lower than the first refractive index, the bars of the second type being adjacent to the cladding.

10. Method for manufacturing as claimed in the preceding claim, **characterized in that** the bars of the second type are disjunct.

11. Method for manufacturing as claimed in the preceding claim, **characterized in that** the bars of the second type are positioned asymmetrically.

12. Method for manufacturing as claimed in the claim 9, **characterized in that** the bars of the second type are positioned continuously around the entire perimeter of the single-mode core (22).
